Europäisches Patentamt

European Patent Office

Office européen des brevets

(11) EP 0 726 223 A1

(19)

(12) **DEMANDE DE BREVET EUROPEEN**

(43) Date de publication:
14.08.1996 Bulletin 1996/33

(51) Int Cl.$^6$: **B66D 5/24**, B60T 17/22

(21) Numéro de dépôt: **96490009.6**

(22) Date de dépôt: **12.02.1996**

(84) Etats contractants désignés:
**AT BE CH DE DK ES FR GB GR IE IT LI LU MC NL PT SE**

(30) Priorité: **13.02.1995 FR 9501799**

(71) Demandeur: **AINF SA**
**59113 Seclin (FR)**

(72) Inventeur: **Boinet, Roger**
**F-59113 Seclin (FR)**

(74) Mandataire: **Duthoit, Michel**
**Bureau Duthoit Legros Associés**
**19, Square Dutilleul**
**BP 105**
**59027 Lille Cedex (FR)**

(54) **Procédé et dispositif de contrôle du fonctionnement d'un dispositif de manutention**

(57) La présente invention concerne un procédé et un dispositif de contrôle du fonctionnement d'un dispositif de manutention (1) d'une masse M telle que, notamment, appareil de levage, monte-charge ou autre, comprenant au moins un frein (3, 4, 5) apte à agir sur un organe (6, 7, 8) en rotation. Selon l'invention :

- on réalise un essai dudit frein (3, 4, 5) en sous-charge,

- on évalue, par extrapolation, les performances dudit frein (3, 4, 5)

- on vérifie si la manutention de la masse M est compatible avec les performances du frein (3, 4, 5).

FIG.1

# Description

La présente invention concerne un procédé et un dispositif de contrôle du fonctionnement d'un dispositif de manutention tel que, notamment, appareil de levage, monte-charge ou autre, muni d'un dispositif de freinage.

A titre d'exemple, la présente invention trouvera son application dans le domaine des ponts roulants, grues, mâts de déchargement de navires ou équivalents, devant soulever occasionnellement une charge proche de leur charge nominale alors qu'ils ne manutentionnent habituellement que des charges nettement plus faibles.

Le procédé et le dispositif conformes à l'invention pourront également trouver leur application dans le contrôle du fonctionnement d'appareils de levage dont la fréquence d'utilisation est entrecoupée par de longues périodes d'arrêt et dont le matériel est soumis à des conditions environnantes agressives et/ou corrosives remettant en cause la fiabilité ou la répétabilité des performances obtenues lors des mises en service précédentes.

La présente invention trouvera encore son application dans le domaine des dispositifs de manutention utilisés à forte cadence. En effet, pour ces derniers, le déréglage progressif par usure impose, afin de garantir la qualité des opérations de manutention, de faire préventivement des opérations de maintenance permettant d'évaluer la fiabilité du dispositif.

Plus généralement, la présente invention trouvera son application dans tous les domaines de l'activité économique dans lesquels on souhaite manutentionner une charge, dans des conditions de sécurité optimale, et, notamment, lorsque les risques de glissement de cette dernière sont graves pour la charge elle-même ou son environnement humain et matériel, ou bien encore quand le positionnement de la charge doit se faire avec une faible incertitude et une bonne répétabilité.

Actuellement, dans le domaine du contrôle de la manutention de charges, on connaît différents procédés et dispositifs limiteurs de charge permettant d'empêcher le déplacement d'une masse trop élevée. Ainsi, de manière usuelle, on contrôle, le poids de la charge à manutentionner et, en cas de dépassement de seuil, on ne soulève ou on ne déplace pas l'objet.

Ces procédés et dispositifs présentent toutefois l'inconvénient de permettre le déplacement des charges de masse inférieure ou égale à la masse nominale sans que l'on connaisse leur capacité réelle à les freiner lors des opérations de manutention. Ainsi, par exemple, lors des opérations de déchargement d'un bâteau, une grue, même équipée d'un limiteur de charge, va pouvoir lever un objet de masse inférieure à la masse nominale alors que l'on ignore si son dispositif de manutention, victime, par exemple, de la corrosion et/ou de l'usure, est réellement capable de le freiner. On risque alors une grave détérioration de la charge elle-même ou de son environnement.

De plus, les procédés et dispositifs actuellement connus ne permettent pas de contrôler si le coefficient dynamique de freinage est conforme à leurs caractéristiques de solidité et/ou de fatigue. Il en résulte à terme un risque de fatigue prématurée de leurs éléments et une diminution de leur durée de vie.

Le but de la présente invention est de proposer un procédé et un dispositif de contrôle du fonctionnement d'un dispositif de manutention qui permettent de pallier les inconvénients précités en évaluant les capacités dudit dispositif de manutention à freiner la charge déplacée.

Un autre but de la présente invention est de proposer un procédé et un dispositif de contrôle du fonctionnement d'un dispositif de manuention qui permettent de neutraliser le déplacement d'une charge si les capacités de freinage dudit dispositif de manutention ne sont pas conformes aux normes de sécurité.

Ainsi, un avantage de la présente invention est d'éviter les risques de chute de la charge manutentionnée et/ou d'éviter un positionnement aléatoire après freinage.

Un autre avantage de la présente invention est qu'elle permet d'évaluer les performances d'un appareil de levage lors de sa réception préalablement à l'essai à charge nominale.

Un autre but de la présente invention est de proposer un procédé et un dispositif de contrôle du fonctionnement d'un dispositif de manutention qui permettent de surveiller les dérives des performances de freinage dudit dispositif de manutention et de neutraliser les déplacements de charges si lesdites dérives ne sont pas conformes aux normes de sécurité.

Un autre but de la présente invention est de proposer un procédé et un dispositif de contrôle du fonctionnement d'un dispositif de manutention qui permettent de déterminer le coefficient dynamique de freinage dudit dispositif de manutention afin d'éviter, grâce à des réglages adéquats, un vieillissement prématuré de ce dernier.

un autre but de la présente invention est de proposer un procédé de contrôle du fonctionnement d'un dispositif de manutention qui puisse être mis en oeuvre sans que l'on ait à connaître les caractéristiques géométriques et mécaniques de la chaîne cinématique et/ou sans avoir à enregistrer, en continu, la vitesse de son organe moteur.

D'autres buts et avantages de la présente invention apparaîtront au cours de la description qui va suivre qui n'est donnée qu'à titre indicatif et qui n'a pas pour but de la limiter.

La présente invention est relative à un procédé de contrôle du fonctionnement d'un dispositif de manutention d'une masse M tel que, notamment appareil de levage, monte-charge ou autre, comprenant au moins un frein apte à agir sur un organe en rotation, caractérisé par le fait que :

- on réalise préalablement un essai dudit frein en sous-charge,

- on évalue, par extrapolation, les performances dudit frein,
- on vérifie si la manutention de la masse M est compatible avec les performances du frein ou l'inverse.

La présente invention concerne également un dispositif pour la mise en oeuvre du procédé de contrôle, exposé ci-dessus, du fonctionnement d'un dispositif de manutention d'une masse M tel que, notamment, appareil de levage, monte-charge ou autre, comprenant au moins un frein apte à agir sur un organe en rotation, caractérisé par le fait qu'il comprend :

- des moyens pour mesurer :

    - la vitesse initiale de rotation $\Omega_f$ et la vitesse maximale $\Omega_{fd}$ du dit organe,
    - les temps de réponse tr et de fonctionnement effectif $t_f$ dudit frein,
    - le déplacement vertical $d_M$ de la charge M,

- un calculateur, apte à évaluer, à partir desdites mesures, les performances dudit frein,
- des moyens pour vérifier la compatibilité de la manutention de la masse M et des performances du frein.

La présente invention sera mieux comprise si l'on se réfère à la description suivante ainsi qu'aux dessins en annexe qui en font partie intégrante.

La figure 1 décrit, de manière schématique, la chaîne cinématique d'un exemple de dispositif de manutention dont le fonctionnement est contrôlé par un procédé conforme à l'invention.

La figure 2 illustre un exemple d'évolution, lors du freinage, de la vitesse angulaire d'un organe freiné d'un dispositif de manutention dont le fonctionnement est contrôlé par un procédé conforme à l'invention.

La présente invention concerne un procédé et un dispositif de contrôle du fonctionnement d'un dispositif de manutention tel que, notamment, appareil de levage, monte-charge ou autre.

Plus généralement, elle trouvera ses applications dans tous les domaines de l'activité économique dans lesquels on souhaite manutentionner une charge, par exemple, sans risque de glissement lors du freinage ou avec une faible incertitude et une bonne répétabilité de son positionnement après arrêt.

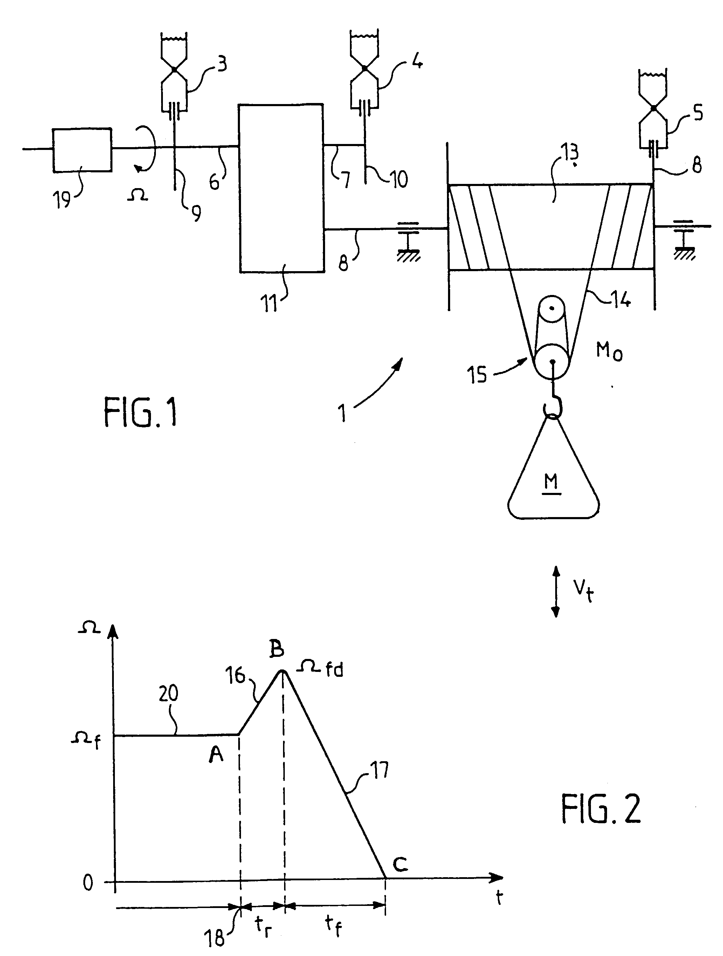

Comme représenté à la figure 1, la présente invention concerne un procédé de contrôle du fonctionnement d'un dispositif de manutention 1 d'une masse M comprenant au moins un frein 3, 4, 5 apte à agir sur un organe 6, 7, 8 en rotation.

Selon l'exemple particulier représenté, le dispositif de manutention 1 est constitué, par exemple, d'un moteur 19 entraînant un axe constituant l'organe 6 en rotation. Sur ce dernier, on peut remarquer un tambour 9 sur lequel agit le premier frein 3, dit frein de service.

Le dispositif de manutention 1 comprend aussi, par exemple, un réducteur 11 par l'intermédiaire duquel l'axe 6 entraîne en rotation un axe 12 coopérant avec un arbre 13 sur lequel sont renroulés des brins d'un câble 14. Ces derniers permettent, par l'intermédiaire d'un moufle 15, de manutentionner la masse M.

Afin de renforcer la sécurité du dispositif de manutention 1, celui-ci comprend, par exemple, en aval du réducteur 11, un second axe 7 constituant l'organe en rotation sur lequel le frein 4, dit frein de secours, est apte à agir. Pour cela, ledit second axe 7 est muni, notamment, d'un tambour 10.

Toujours afin de renforcer la fiabilité du dispositif de manutention 1, celui-ci peut également comprendre, par exemple, un troisième frein 5, dit frein de sécurité, apte à agir, notamment, directement sur l'arbre 13.

En ce qui concerne les freins 3-5, la présente invention s'applique, notamment, à des dispositifs, connus de l'homme de l'art, aptes à ralentir et/ou stopper, notamment par frottement solide, la rotation angulaire d'un axe.

Selon le procédé conforme à l'invention, on réalise préalablement un essai du frein 3-5 en sous-charge, et on évalue, par extrapolation, les performances dudit frein 3-5. Lors des phases d'exploitation, on vérifie alors si la manutention de la masse M est compatible avec les performances du frein 3-5. Il peut s'agir, par exemple, comme développé plus loin, de la distance et/ou du couple de freinage.

Ainsi, grâce à l'essai en sous-charge prévu dans le procédé conforme à l'invention, on peut tester le fonctionnement du dispositif de manutention 1 sans risque. De plus, grâce à cet essai, on peut, par extrapolation, déduire les performances dudit frein 3-5 quelle que soit la charge M à manutentionner et, selon les résultats obtenus, on autorise ou non le déplacement de ladite masse M.

On évite ainsi la manutention de charges incompatibles avec des performances du frein 3-5, ce dernier ayant pu être altéré, par exemple, par corrosion et/ou usure ou sous-dimensionné.

Il est à noter que la présente invention s'applique, notamment, à tout ou partie des freins 3-5. De plus, l'organe sur lequel ces derniers sont aptes à agir peut être constitué par tout élément en rotation de la chaîne cinématique du dispositif de manutention 1.

Selon un mode particulier de mise en oeuvre, le procédé de contrôle conforme à l'invention, décrit tout d'abord une série d'étapes constituant, par exemple, une phase d'initialisation permettant, à partir de l'essai réalisé en sous-charge d'évaluer, par extrapolation, les performances du frein 3-5 quelle que soit la charge M à manutentionner.

Ainsi, par exemple, on mesure, lors de l'essai en sous-charge, les paramètres suivants :

- le temps de réponse $t_r$ du frein 3-5,

- le temps de fonctionnement effectif $t_f$ du frein 3-5,
- le déplacement vertical $d_M$ de la charge M lors du freinage.

A ce sujet, comme représenté à la figure 2 où l'on observe l'allure de la vitesse de rotation $\Omega$ de l'organe 6-8 en fonction du temps dans le cas d'une masse M déplacée en descente, on observe, après l'ordre de déclenchement du freinage une première phase pendant laquelle le moteur 19 n'est plus alimenté alors que le frein 3-5 n'agit pas encore sur l'organe en rotation 6-8. Ceci se traduit, pendant le temps correspondant de réponse $t_r$ dudit frein 3-5, par une survitesse, repérée 16, dudit organe en rotation 6-8. Après cet intervalle de temps $t_r$, le frein 3-5 coopère avec l'organe en rotation 6-8 et stoppe, lors d'une seconde phase repérée 17 d'une durée t le déplacement de la charge M.

Selon le procédé conforme à l'invention, par exemple grâce à la mesure de la vitesse de rotation $\Omega$ de l'organe 6-8 en rotation, lors de l'essai en sous-charge, on mesure également :

- la vitesse initiale de rotation $\Omega_f$ dudit organe 6-8 à l'instant, repéré 18, de l'ordre de déclenchement du freinage,
- la vitesse maximale $\Omega_{fd}$ de l'organe 6-8 lors du freinage.

Selon l'invention, on détermine également, par exemple, pendant la phase d'initialisation, une grandeur caractéristique R, fonction de la chaîne cinématique du dispositif de manutention 1 par mesure, en régime établi, de la vitesse de rotation de l'organe 6-8 et du déplacement de la masse M pendant un intervalle de temps $\delta t$ donné.

Selon l'exemple particulier représenté à la figure 1, l'expression de R est donnée, notamment par la formule suivante :

$$V_1 = \Omega_f \cdot R$$

où $V_1$ représente la vitesse linéaire de déplacement de la masse M.

Le paramètre R est fonction, par exemple, du diamètre de l'arbre 13, du nombre de brins sur ledit arbre 13, du nombre de brins au mouflage 15, du coefficient de réduction entre l'axe 12 et l'organe 6-8 sur lequel agit le frein 3-5, ou autre.

Comme représentée à la figure 2, la vitesse de rotation de l'organe 6-8 en régime permanent constitue la vitesse de rotation dudit organe 6-8 à l'instant 18 de l'ordre de déclenchement du freinage.

Ainsi, grâce à cette mesure, qui peut être effectuée lors de la phase, repérée 20, précédent l'ordre de déclenchement du freinage pendant l'essai en sous-charge, on s'affranchit de la connaissance des caractéristiques géométriques et mécaniques de la chaîne cinématique du dispositif de manutention 1. Ceci est particulièrement appréciable dans le cas de dispositif de manutention 1 de longue durée de vie. En effet, pour ces derniers, les caractéristiques géométriques et/ou mécaniques sont souvent égarées ou ignorées.

Néanmoins, si ces caractéristiques, lors de la mise en oeuvre du procédé, sont connues de l'opérateur, la phase de détermination de R évoquée plus haut peut devenir facultative. Elle présente toutefois l'avantage de constituer un outil de vérification de la validité des informations fournies.

Selon un mode particulier de mise en oeuvre du procédé conforme à l'invention, dans le cas d'une détermination de R par la mesure et le calcul, on vérifie la validité de ladite mesure par un essai, similaire, à vide.

On poursuit la phase de validation en déterminant, à partir des paramètres relevés, notamment, lors de l'essai en sous-charge, des données intrinsèques au dispositif de manutention 1. Pour cela, on résout un système d'équation caractérisant la cinématique du déplacement de la masse M. Ce système se présente, par exemple, sous la forme suivante :

$$C_c = (M_o + M) g R$$

$$C_d = C_f - C_c$$

$$C_d = I_f \Omega_{fd} / t_f$$

$$I_F = I_{of} + M.R^2$$

$$\Omega_{fd} = \Omega_f + C_c t_r / I_f$$

$$d_M = d_r + d_f$$

$$d_r = (\Omega_f + C_c / 2 . t_r/I_f).t_r. R$$

$$d_f = \Omega_{fd} . t_f / 2 . R$$

où $C_c$ représente le couple statique d'entraînement dû à la masse M,

$C_f$ représente le couple de freinage donné par le frein 3-5,

$C_d$ représente le couple dynamique de freinage en descente,

Mo représente la masse de la partie mobile du dispositif de manutention 1,

g représente l'accélération de la pesanteur terrestre,

$I_f$ représente l'inertie des masses en mouvement ramenées au frein 3-5,

$I_{of}$ représente l'inertie des masses du dispositif de manutention 1 en mouvement ramenées au frein 3-5,

$d_r$ représente le déplacement de la masse M pendant $t_r$,

$d_f$ représente le déplacement de la masse M pendant le temps $t_f$.

Il est à noter que l'établissement du système d'équation précédent prend pour hypothèse que le couple de freinage ou le couple statique d'entraînement dû à la masse M sont constants, tout du moins lors d'un freinage.

Grâce aux différentes mesures préalables, obtenues notamment lors de l'essai en sous-charge, les paramètres $\Omega_f$, $\Omega_{fd}$, $t_r$, $t_f$, M et R sont connus. Le paramètre g étant connu par ailleurs, les paramètres restant indéterminés sont au nombre de huit : $C_c$, $M_o$, $C_d$, $C_f$, $I_f$, $I_{of}$, $d_r$ et $d_f$.

Le système exposé plus haut est donc soluble et selon l'invention, on peut déterminer par exemple des données intrinsèques au dispositif de manutention 1 comme, notamment, la masse $M_o$ et l'inertie $I_{of}$ de ses éléments en mouvement ainsi que le couple de freinage $C_f$.

Ces données intrinsèques au dispositif de manutention 1 ayant été ainsi déterminées, on en déduit, par résolution du même système d'équation, une loi de calcul donnant la distance de freinage $d_M$ en fonction de la masse M déplacée. En effet, selon l'exemple évoqué plus haut, les paramètres $M_o$, $I_{of}$ et $C_f$ étant connus, $\Omega_f$, $t_r$ et R ayant été préalablement mesurés, les inconnus restants sont $C_c$, $C_d$, $I_f$, $\Omega_{fd}$, $d_M$, $d_r$, $d_f$ et $t_f$. On se retrouve donc, comme précédemment, confronté au problème connu de résolution d'un système de huit équations à huit inconnues.

Il est à noter que, lors du freinage, les conditions les plus sévères étant rencontrées en cas de descente de la masse M, les résultats obtenus grâce au calcul précédent constitueront des majorations des résultats obtenus en cas de levage.

Enfin, le procédé conforme à l'invention est applicable quelle que soit la vitesse $\Omega_f$. En effet, on peut prévoir la détermination, pour chaque valeur du paramètre $\Omega_f$ donnée, d'une loi de calcul correspondante donnant la distance de freinage en fonction de la masse M manutentionnée par résolution pour chaque dite valeur $\Omega_f$ du système d'équation exposé plus haut.

On peut également remarquer que la détermination de R par mesure, en régime établi, de la vitesse de rotation $\Omega$ de l'organe 6-8 et du déplacement de la masse M pendant un intervalle de temps $\Omega$ donné permet, dans l'établissement dudit système d'équation, de ne pas avoir à prendre en compte le rendement de la charge cinématique du dispositif de manutention 1.

Suivant un mode particulier de réalisation du procédé conforme à l'invention, on réalise l'essai en sous-charge avec une masse M de poids inconnu et on s'affranchit de ladite indétermination par un essai à vide.

L'essai à vide peut également, par exemple, servir à évaluer la précision des résultats obtenus sur les données intrinsèques du dispositif de manutention 1.

A titre d'exemple, on effectue ledit essai en sous-charge avec une masse $M_1$ de l'ordre de 0 à 20 % de la charge nominale.

Enfin, pour terminer la phase de validation, on vérifie, par exemple, les résultats de l'extrapolation par un second essai en sous-charge dans lequel on mesure la distance réelle de freinage d'une masse $M_j$ que l'on compare à la distance évaluée $d_{Mj}$ par la loi de calcul évoquée plus haut. Ce second essai en sous-charge peut être constitué, notamment, par l'essai à vide. Par ailleurs, il permet d'estimer l'incertitude de la détermination de la distance de freinage en fonction de la masse manutentionnée grâce à ladite loi de calcul.

La phase de validation terminée, on peut prévoir différents modes d'utilisation des résultats obtenus. Par exemple, dans le cas d'un dispositif de levage utilisé ponctuellement dont on veut vérifier, avant de manutentionner une charge M; sa capacité à la freiner, on évalue, par la loi de calcul établie lors de la phase de validation, la distance de freinage de la charge à manutentionner $M_n$. Si la distance de freinage ainsi calculée est supérieure à celle autorisée, on neutralise le déplacement de ladite charge.

Suivant un autre mode de réalisation de l'invention, on peut également prévoir de déterminer, selon ladite loi de calcul, la masse maximale qui peut être manutentionnée, on contrôle alors, avant tout déplacement, la masse de la charge que l'on souhaite manipuler.

Suivant un autre mode particulier d'exploitation, on calcule, grâce au système d'équation évoqué plus haut, et on enregistre, lors de l'essai en sous-charge, le couple de freinage $C_{fi}$ ; puis, lors de l'exploitation, on détermine le couple de freinage $C_{fx}$ à chaque freinage d'une masse $M_x$.

On compare lesdits couples de freinage $C_{fx}$ et $C_{fi}$ et on surveille les dérives entre ces deux paramètres. En cas de dépassement de seuil, on neutralise le déplacement de la masse M à manutentionner.

Suivant ce mode particulier de mise en oeuvre du procédé conforme à l'invention, on peut prévoir, en outre, un essai à vide avant chaque manutention d'une masse $M_x$ afin de recalculer le couple de freinage sans avoir à utiliser cette dernière.

Lors de l'exploitation, on peut déterminer le couple de freinage $C_{fx}$ en mesurant:

- le temps de réponse $t_{rx}$ du frein 3-5,
- le temps de fonctionnement effectif $t_{fx}$ du frein 3-5.

On mesure également, par exemple grâce à la mesure de rotation de la vitesse $\Omega_x$ :

- la vitesse de rotation $\Omega_{fx}$ de l'organe 6-8 à l'instant de l'ordre de déclenchement du freinage,
- la vitesse maximale $\Omega_{fdx}$ de l'organe 6-8 lors du freinage,

puis, afin de déterminer $C_{fx}$, on résout grâce à ces différentes mesures et à certains paramètres enregistrés lors de la phase de validation, le système d'équation évoqué plus haut.

Selon un autre mode particulier de réalisation du procédé conforme à l'invention, on prévoit, notamment grâce à un peson, la mesure de l'effort F exercé par la masse M en mouvement et on détermine, grâce au paramètre mesuré précédemment, les déformations du dispositif de manutention 1 dues à l'amortissement des phénomènes mécaniques déclenchés par le freinage.

La présente invention concerne un dispositif pour la mise en oeuvre du procédé de contrôle décrit plus. Ce dispositif comprend, des moyens pour mesurer la vitesse initiale de rotation $\Omega_f$ et la vitesse maximale $\Omega_{fd}$ de l'organe 6-8. Il peut s'agir, par exemple, d'une dynamo-tachymétrique ou de tout autre dispositif connu de l'homme de l'art.

Le dispositif conforme à l'invention comprend également des moyens de mesure des temps de réponse $t_r$ et de fonctionnement effectif $t_f$ du frein 3-5 ainsi que des moyens pour mesurer le déplacement vertical $d_M$ de la charge M.

De plus, il comprend un calculateur, apte à évaluer, à partir des mesures évoquées plus haut, les performances du frein 3-5.

Enfin, le dispositif conforme à l'invention comprend des moyens pour vérifier la compatibilité de la manutention de la masse M et des performances du frein 3-5. Il peut s'agir, par exemple, de moyens pour afficher les résultats obtenus, un opérateur décidant alors de la conduite à tenir. Il peut s'agir également, par exemple, de moyens comparateurs permettant éventuellement d'inhiber, en cas de dépassement des normes de sécurité prévues, le déplacement de la charge M à manutentionner.

Cela étant, en ce qui concerne la mesure de la vitesse $\Omega$, on constate que cette dernière n'est utile que pour la connaissance de certains points, à savoir ceux correspondant aux changements d'états des caractéristiques cinématiques de l'organe 6-8.

Par changements d'états des caractéristiques cinématiques, on entend passage de l'un à l'autre des états suivants : mouvement constant, mouvement accéléré, mouvement freiné et/ou immobilisation.

Afin d'éviter la mesure surabondante que constituerait un relevé en continu de la vitesse, on détermine, selon un mode particulier de réalisation de l'invention, les changements d'états des caractéristiques cinématiques de l'organe 6-8 en repérant ponctuellement au moins son immobilisation, notamment en phase d'exploitation.

Pour cela, on mesure au moins un signal secondaire, généré lors des mouvements dudit organe 6-8. Par signal secondaire, on comprend signal différent de la course, du régime, de la vitesse et/ou de l'accélération dudit organe 6-8.

Selon l'exemple illustré, lesdits mouvements sont constitués, notamment, par la rotation des parties mobiles du dispositif de manutention. Ils peuvent aussi l'être, éventuellement, par les déplacements de la charge M.

On détecte alors le passage de la valeur dudit signal par rapport à un seuil de signal donné, par exemple, par surveillance de l'apparition de fronts montants et/ou descendants.

La présente invention présente ainsi l'avantage de permettre le repérage de changements d'états des caractéristiques cinématiques de l'organe 6-8 sans avoir à déterminer, en continu, la vitesse $\Omega$ de ce dernier. En effet, selon le présent mode de réalisation, il suffit de comparer la valeur d'un signal secondaire par rapport à un seuil et de détecter ponctuellement le passage de ladite valeur en-dessous. ou au-dessus dudit seuil.

Selon un mode particulier de réalisation de l'invention, ledit signal secondaire mesuré varie dans le même sens que la vitesse dudit organe 6-8 et ledit seuil de signal correspond à la valeur dudit signal lorsque ledit organe 6-8 est à l'arrêt. On repère alors l'immobilisation dudit organe 6-8 en détectant le passage de la valeur dudit signal en-dessous dudit seuil de signal.

A titre d'exemple, on mesure, en tant que dit signal secondaire, l'amplitude et/ou la fréquence des vibrations générées par le dispositif de manutention 1.

Si lesdites vibrations se trouvent dans le domaine sonore, on peut alors repérer l'immobilisation dudit organe moteur 6-8, par exemple, par le silence dudit dispositif de manutention ou, tout du moins, par passage de l'intensité sonore en-dessous d'un seuil de bruit donné correspondant au bruit résiduel dudit dispositif de manutention 1 à l'arrêt.

Selon un mode particulier de réalisation de l'invention, par exemple lors du freinage tel qu'illustré à la figure 2 :

- on repère ponctuellement l'ordre de freinage,
- on repère ponctuellement le commencement effectif dudit freinage, en réalisant, au moins à partir dudit ordre, les étapes suivantes :

  - on mesure le niveau de contrainte se propageant dans le dispositif de manutention 1,
  - on détecte le passage dudit niveau de contraintes au-dessus d'un seuil de contrainte donné,

- on effectue, au moins à partir dudit ordre, ledit repérage ponctuel de l'immobilisation dudit organe.

On repère ainsi l'emplacement des points A, B, C de changements d'états, au moins sur l'axe des abscisses, sans avoir à enregistrer en continu puis analyser la vitesse de l'organe moteur 2.

Par freinage effectif, on entend moment à partir duquel les mâchoires du frein 3-5 coopèrent effectivement avec l'organe 6-8. A titre de remarque, on repère d'ailleurs ce phénomène par mesure du niveau de contraintes car ces dernières sont l'image des déformations générées dans le dispositif de manutention 1 par friction des différentes pièces mécaniques entre elles.

La mesure du ou des signaux secondaires et/ou du niveau de contrainte est réalisée, soit de manière continue, soit de manière discrète, tout en conservant une fréquence de prise d'informations assez élevée de manière à assurer la qualité du repérage des changements d'états.

Selon un mode particulier de réalisation de l'invention, on définit au moins ledit seuil de signal et/ou ledit seuil de contrainte lors de l'essai de freinage préalable, prévu pendant la phase d'initialisation évoquée plus haut.

Pour réaliser ladite détermination des changements d'états, le dispositif conforme à l'invention comprend, selon un mode particulier de réalisation, des moyens pour repérer ponctuellement au moins l'immobilisation dudit organe 6-8.

Il s'agit, par exemple, d'un capteur piézo-électrique, prévu dans le cas du dispositif de manutention 1 illustré, sur ses parties mobiles en rotation. Ledit capteur piézo-électrique permet ainsi de mesurer, notamment, les vibrations du dispositif de manutention 1 et, couplé à des moyens de traitement, de détecter le passage desdites vibrations en-dessous d'un seuil donné, repérant alors l'immobilisation de l'installation.

Ledit dispositif comprend, en outre, éventuellement, des moyens pour repérer ponctuellement un ordre de freinage et des moyens pour repérer ponctuellement le commencement effectif dudit freinage.

Lesdits moyens pour repérer ponctuellement un ordre de freinage sont constitués, par exemple, par un instrument de détection de la présence d'un courant dans le circuit de commande du frein 3-5, ledit circuit de commande se présentant sous la forme, notamment, d'une électrovanne et/ou d'un électro-aimant.

Quant aux moyens pour repérer le commencement effectif du freinage, ils sont constitués, par exemple, de jauges extensométriques aptes à mesurer le niveau de contraintes se propageant dans le dispositif de manutention 1 et de moyens de traitement associés permettant la détection du passage dudit niveau de contraintes au-dessus d'un seuil de contrainte donné.

Grâce à ladite détermination des changements d'états, on peut donc mesurer le temps écoulé entre deux d'entre eux.

Comme représenté par la figure 2, on peut ainsi déterminer, lors du freinage, par exemple, le temps $t_r$ écoulé entre l'ordre de freinage et le commencement effectif dudit freinage et/ou le temps $t_f$ écoulé entre ledit commencement effectif du freinage et l'immobilisation de l'organe 6-8.

Ladite détermination des changements d'états permet également de déduire la vitesse dudit organe 6-8 aux instants desdits changements d'états, sa vitesse initiale $\Omega_f$ étant connue et/ou ses caractéristiques cinématiques étant pré-établies, par exemple, en fonction de la charge M.

En effet, si notamment grâce à la phase initiale d'essai évoquée plus haut, on détermine les lois de comportement cinématique de l'organe 6-8 entre les différents changements d'états, la connaissance préalable de sa vitesse initiale et/ou du temps écoulé entre chaque changement d'état permet alors, notamment, de connaître sa vitesse à chacun de ces instants.

On peut ainsi déterminer, grâce au procédé de contrôle conforme à l'invention, lors de la phase de freinage illustré à la figure 2, par exemple, la vitesse $\Omega_{fd}$ de l'organe 6-8 lors du commencement effectif du freinage.

Selon ledit mode de réalisation, on détermine donc, par exemple, $\Omega_f$, $\Omega_{fd}$, $t_r$ et/ou $t_f$ sans mesure en continu de la vitesse et l'on peut évaluer, selon le procédé conforme à l'invention, les performances du frein 3-5 par résolution du système d'équation présenté ci-dessus.

Ainsi, on peut contrôler, notamment de façon permanente, le fonctionnement du frein d'un dispositif de manutention tel que, par exemple, appareillage de levage, monte-charge ou autre.

Ladite détermination des changements d'états permet, de plus, d'améliorer le suivi d'une éventuelle dérive des caractéristiques du freinage.

En effet, la mesure du temps $t_r$ permet, notamment, d'avoir une image de l'état du circuit de commande du frein 3-5 tandis que la mesure du temps $t_f$ permet, par exemple, de déterminer l'efficacité de ce dernier.

A chaque freinage, on détermine ainsi, selon le procédé de contrôle conforme à l'invention, les temps $t_r$ et $t_f$ que l'on compare à des temps de référence, prélevés notamment, lors de la phase d'initialisation, et l'on surveille les éventuelles dérives.

La surveillance distincte de l'évolution des temps $t_r$ et $t_f$ permet d'ailleurs, notamment, de déterminer sélectivement s'il convient d'intervenir sur le circuit de commande du frein 3-5 et/ou directement sur ce dernier.

De manière à assurer la pertinence des comparaisons entre les mesures effectuées et les temps de référence préalablement relevés, une éventuelle correction en fonction de la masse de la charge M freinée pourra être effectuée. Une telle modélisation est réalisée, notamment, grâce à la phase initiale d'essai évoquée plus haut, de manière à déterminer les caractéristiques du frein 3-5 en fonction de la charge M.

Naturellement, d'autres mises en oeuvre de la présente invention, à la portée de l'homme de l'art, auraient pu être envisagées sans pour autant sortir du cadre de la présente demande.

**Revendications**

1. Procédé de contrôle du fonctionnement d'un dispositif de manutention (1) d'une masse M tel que notamment appareil de levage, monte-charge ou autre, comprenant au moins un frein (3, 4, 5) apte à agir sur un organe (6, 7, 8) en rotation, caractérisé par le fait que :

   - on réalise préalablement un essai dudit frein (3, 4, 5) en sous-charge,
   - on évalue, par extrapolation, les performances dudit frein (3, 4, 5),

- on vérifie si la manutention de la masse M est compatible avec les performances du frein (3, 4, 5), ou l'inverse.

2. Procédé de contrôle selon la revendication 1, caractérisé par le fait que l'on mesure, lors de l'essai en sous-charge, les paramètres suivants :

   - le temps de réponse $t_r$ du frein (3, 4, 5),
   - le temps de fonctionnement effectif $t_f$ du frein (3, 4, 5),
   - le déplacement vertical $d_M$ de la charge M lors du freinage,
   - la vitesse initiale de rotation $\Omega_f$ de l'organe (6, 7, 8) à l'instant de l'ordre de déclenchement du freinage,
   - la vitesse maximale $\Omega_{fd}$ de l'organe (6, 7, 8) lors du freinage.

3. Procédé de contrôle selon la revendication 1, caractérisé par le fait que l'on détermine également une grandeur caractéristique R, fonction de la chaîne cinématique du dispositif de manutention (1) par mesure, en régime établi, de la vitesse de rotation de l'organe (6, 7, 8) et du déplacement de la masse M pendant un intervalle de temps $\delta t$ donné.

4. Procédé de contrôle selon la revendication 3, caractérisé par le fait que l'on vérifie la validité de la mesure de R par un essai à vide.

5. Procédé de contrôle selon la revendication 2, caractérisé par le fait que l'on détermine, à partir des paramètres relevés lors de l'essai en sous-charge, grâce à un système d'équation, des données intrinsèques au dispostiif de manutention (1) et on en déduit, par résolution dudit sytème, une loi de calcul de la distance de freinage $d_M$ en fonction de la masse M déplacée.

6. Procédé de contrôle selon la revendication 1, caractérisé par le fait que l'on réalise l'essai en souscharge avec une masse M de poids inconnu et on s'affranchit de ladite indétermination par un essai à vide.

7. Procédé de contrôle selon la revendication 1, caractérisé par le fait que l'on effectue l'essai en souscharge avec une masse $M_1$ de l'ordre de 0 à 20 % de la charge nominale.

8. Procédé de contrôle selon la revendication 5, caractérisé par le fait que l'on vérifie les résultats de l'extrapolation par un second essai en sous-charge dans lequel on mesure la distance réelle de freinage d'une masse $M_j$ que l'on compare à la distance évaluée par ladite loi de calcul.

9. Procédé de contrôle selon la revendication 5, caractérisé par le fait que l'on évalue, par ladite loi de calcul, la distance de freinage de la charge à manutentionner $M_n$ et on neutralise le déplacement de ladite charge si la distance de freinage calculée est supérieure à celle autorisée.

10. Procédé de contrôle selon la revendication 5, caractérisé par le fait que :

    - on calcule, grâce audit système d'équation, et on enregistre, lors de l'essai en sous-charge, le couple de freinage $C_{fi}$,
    - on détermine, lors de l'exploitation, le couple de freinage $C_{fx}$ à chaque freinage d'une masse $M_x$,
    - on compare lesdits couples de freinage $C_{fi}$ et $C_{fx}$ et on surveille les dérives entre ces deux paramètres,
    - on neutralise le déplacement de la masse M à manutentionner si la dérive dépasse un seuil donné.

11. Procédé de contrôle selon la revendication 10, caractérisé par le fait que l'on détermine, lors de l'exploitation, le couple de freinage $F_{fx}$ en mesurant :

    - le temps de réponse $t_{rx}$ du frein (4, 5),
    - le temps de fonctionnement effectif $t_{fx}$ du frein (3, 4, 5);
    - la vitesse initiale de rotation $\Omega_{fx}$ de l'organe (6, 7, 8) à l'instant de l'ordre de déclenchement du freinage,
    - la vitesse maximale $\Omega_{fdx}$ de l'organe (6, 7, 8) lors du freinage, puis on résout ledit système d'équation.

12. Procédé de contrôle selon la revendication 1, caractérisé par le fait que l'on détermine les changements d'états des caractéristiques cinématiques de l'organe (6-8) en repérant ponctuellement au moins son immobilisation par réalisation des étapes suivantes :

    - on mesure au moins un signal secondaire, généré lors des mouvements dudit organe (6-8),
    - on détecte le passage de la valeur dudit signal par rapport à un seuil de signal donné.

13. Procédé de contrôle selon la revendication 12, caractérisé par le fait que, lors du freinage :

    - on repère ponctuellement l'ordre de freinage,
    - on repère ponctuellement le commencement effectif dudit freinage, en réalisant, au moins à partir dudit ordre, les étapes suivantes :

      - on mesure le niveau de contraintes se propageant dans le dispositif de manutention (1),

- on détecte le passage dudit niveau de contrainte au-dessus d'un seuil de contrainte donné,

- on effectue, au moins à partir dudit ordre, ledit repérage ponctuel de l'immobilisation dudit organe (6-8).

14. Dispositif pour la mise en oeuvre du procédé de contrôle selon la revendication 1 du fonctionnement d'un dispositif de manutention (1) d'une masse M, tel que, notamment, appareil de levage, monte-charge ou autre, comprenant au moins un frein (3, 4, 5) apte à agir sur un organe (6, 7, 8) en rotation, caractérisé par le fait qu'il comprend :

- des moyens pour mesurer :

   - la vitesse initiale de rotation $\Omega_f$ et la vitesse maximale $\Omega_{fd}$ dudit organe (6, 7, 8),
   - les temps de réponse $t_r$ et de fonctionnement effectif $t_f$ dudit frein (3, 4, 5),
   - le déplacement vertical $d_M$ de la charge M,

- un calculateur, apte à évaluer, à partir desdites mesures, les performances dudit frein (3, 4, 5),
- des moyens pour vérifier la compatibilité de la manutention de la masse M et des performances du frein (3, 4, 5).

15. Dispositif de contrôle selon la revendication 14, caractérisé par le fait qu'il comprend, en outre, des moyens pour repérer ponctuellement au moins l'immobilisation dudit organe (6, 7, 8).

FIG.1

FIG.2

Office européen
des brevets

**RAPPORT DE RECHERCHE EUROPEENNE**

Numero de la demande

EP 96 49 0009

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | DE-U-93 15 641 (SUDHOP)<br>* le document en entier *<br>--- | 1<br>2-15 | B66D5/24<br>B60T17/22 |
| A | DE-B-12 52 392 (VICTOR ROLFF KOMMANDITGESELLSCHAFT)<br>--- | | |
| A | FR-A-2 611 192 (BILLIET)<br>--- | | |
| A | US-A-5 239 486 (MORTIER)<br>----- | | |

DOMAINES TECHNIQUES RECHERCHES (Int.Cl.6)

B66D
B60T

Le présent rapport a été établi pour toutes les revendications

| Lieu de la recherche | Date d'achèvement de la recherche | Examinateur |
|---|---|---|
| LA HAYE | 29 Mai 1996 | Van den Berghe, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)